# EUROPEAN PATENT APPLICATION

(11) **EP 3 187 365 A1**
(43) Date of publication of application: **05.07.2017**
(21) Application number: 15836110.5
(22) Date of filing: 22.05.2015
(51) Int. Cl.: B60N 2/02, A47C 7/38, A47C 7/40, B60N 2/06, B60N 2/16, B60N 2/22, B60N 2/44, B60N 2/48

(54) **VEHICLE SEAT**

(30) Priority: 27.08.2014 JP 2014172722
(71) Applicant: Tachi-S Co., Ltd., Akishima-shi, Tokyo 196-8611 (JP)
(72) Inventor: TOBATA Hideo, Akishima-shi Tokyo 196-8611 (JP); TAGUCHI Masayuki, Akishima-shi Tokyo 196-8611 (JP); KOIKE Atsushi, Akishima-shi Tokyo 196-8611 (JP); AMANO Tomohiro, Akishima-shi Tokyo 196-8611 (JP)
(74) Representative: Beetz & Partner mbB
(86) International application number: PCT/JP2015/064737
(87) International publication number: WO 2016/031321

(57) **Abstract**

The vehicle seat (1) includes: an adjustment position selecting means (12, 13, 14) for selecting an adjustment position of each part of the seat (1) corresponding to the build of the occupant; a seat position adjusting means (8) for the occupant to manually adjust a position of each part of the seat (1); and a seat position detecting means for detecting a position of each part of the seat (1). Build information selected with the adjustment position selecting means and positional information detected with the seat position detecting means are transmitted to an electronic control unit (ECU) provided in the vehicle by wireless communication or wired communication. In the electronic control unit (ECU), proper positional information of each part of the seat (1) estimated based on the build information and the positional information are checked against each other. When both pieces of information agree with each other, the occupant is notified of the agreement through a notifying means.

## Description

### Technical Field

The present invention relates to a vehicle seat having a seat position adjustment function for adjusting a seat position according to the build of an occupant and in particular to a vehicle seat having a notifying function for notifying an occupant of exact agreement with a desired adjustment position.

### Background Art

Vehicle seats such as seats for automobiles are provided with various adjustment functions so that steering, pedals, levers, and switches can be operated in safety without undue stress and a good command of the road can be given. Such adjustment functions adjust a driving posture in accordance with the build of an occupant through seat rails (seat slide) for adjusting a fore-and-aft position of a seat, a reclining adjuster for adjusting an angle of a seat back, or the like.

In case of a seat designed to manually operate an adjustment mechanism of each part of the seat, an occupant operates a lever or the like to unlock the adjustment mechanism. After the seat position is adjusted, the occupant locks the adjustment mechanism again.

In a seat so designed that an adjustment mechanism of each part of the seat is operated by a power mechanism using electrical power or the like, an occupant operates a switch. The seat is thereby driven to a position suitable for the build of the occupant and then the power mechanism is stopped.

Both in positioning by manual operation and in positioning by a power mechanism using electrical power or the like, an occupant must find an optimum position, that is, an optimum seat position by him/herself by operating the mechanism as is seated on the seat. That is, an optimum position is determined by trial and error.

An example of a background technology in the present technical field is described in Patent Literature 1. Patent Literature 1 discloses a seat lock confirmation apparatus. The seat lock confirmation apparatus includes a slide mechanism for moving a seat cushion forward and backward and a reclining mechanism for leaning a seat back forward and backward. The seat lock confirmation apparatus detects a lock state of a seat at an engaging portion where each mechanism is locked or unlocked in conjunction with the operation of an operating lever. The seat lock confirmation apparatus further includes a sensor for detecting whether or not the operating lever is a lock position and a notifying means for notifying about whether or not a lock state is favorable based on a detection signal from the sensor.

According to the seat lock confirmation apparatus in Patent Literature 1, it can be confirmed that a seat adjuster is imperfectly locked and an occurrence of a trouble caused thereby can be prevented.

Patent Literature 2 discloses an automatic seat position adjusting apparatus designed to a driving seat shiftable between multiple driving positions to a stored driving position. The automatic seat position adjusting apparatus includes: a data storing means for storing seating data obtained by correlating the weight of a driver with the driver's desired driving position; a weight detecting means for detecting the weight of a driver seated on the driving seat; a data detecting means for detecting in the data storing means seating data including a weight within a predetermined range of the weight detected by the weight detecting means; and a seat controlling means for automatically moving the driving seat to a driving position included in the seating data detected by the data detecting means.

According to the automatic seat position adjusting apparatus in Patent Literature 2, a driving seat is automatically moved to a position most suitable for a driver by the driver being just seated on the driving seat. The driver may start driving without performing a cumbersome operation.

Patent Literature 3 discloses a vehicle seat so designed to manually perform positioning of a slidable seat cushion and an angle-adjustable seat back. The vehicle seat includes: a switch means operated by a sitter; a detection means for detecting a slide position of the seat cushion and an angular position of the seat back; a storage means for storing a position detected by the detection means; a notification means for notifying a sitter of information on a slide position of the seat cushion and an angular position of the seat back; and a control means for causing a detected position from the detection means to be stored in the storage means when the switch means is operated and, when a detected position from the detection means agrees with a stored position in the storage means during adjustment of a slide position of the seat cushion and an angular position of the seat back, actuating the notification means.

According to the vehicle seat in Patent Literature 3, the seat cushion and the seat back can be positioned based on actuation of the notification means. Therefore, adjusting operation need not be repeated and operation is facilitated.

### Citation List

### Patent Literature

PTL 1: Japanese Patent Application Laid-Open No. 2003-11712
PTL 2: Japanese Patent Application Laid-Open No. 2007-152997
PTL 3: Japanese Patent Application Laid-Open No. 2008-290653

### Summary of Invention

### Technical Problem

As mentioned above, in vehicle seats such as seats for automobiles, devices have been used to adjust each part of a seat to the build of an occupant by the occupant's own manual operation or electrical operation so that a safe and comfortable driving posture can be maintained.

However, conventional adjustment mechanisms for vehicle seats involve problems. As mentioned above, an occupant must operate an adjustment mechanism and find an optimum seat position by him/herself. Since an optimum position is determined by trial and error, it takes some time to adjust the seat. Further, as the result of seat improvement, a number of items to be adjusted and an amount of adjustment have been increased and this complicates adjustment work conducted by an occupant.

In conjunction with complication of seat adjustment, conventional adjustment dependent on an occupant's feeling has become insufficient to find an optimum seat position suited to the build of the occupant.

When an occupant is seated on a seat, it can be relatively easily determined through the occupant's feeling whether or not an adjustment has been made so as to operate steering, pedals, levers, and switches in safety without undue stress and obtain a good command of the road. Meanwhile, a subtle adjustment error causes unnecessary accumulation of fatigue and may be found only after a long-time drive.

The technology in Patent Literature 1 relates to detection of a lock state of a seat adjustment part and notification of whether or not a lock state is favorable. With this technology, the above-mentioned troublesomeness of seat adjustment work cannot be eliminated.

The technology in Patent Literature 2 includes a means for detecting the weight of an occupant. However, since a seat position is uniquely determined only by the weight of an occupant, no consideration is given to variations in body form or posture among individuals. Therefore, a challenge of reducing fatigue due to long-time drive cannot be achieved.

The technology in Patent Literature 3 also involves a problem. When an occupant manually adjusts his/her seat, a buzzer is sounded on an occasion when an adjustment position adjusted by the occupant and an adjustment position stored beforehand agree with each other. This makes it unnecessary to repeat adjusting operation. However, since the accuracy of seat adjustment is at the same level as conventional, the above-mentioned challenge of reducing fatigue due to long-time drive cannot be achieved.

Consequently, it is an object of the present invention to provide a vehicle seat favorable in fit feeling in which when a seat position is adjusted according to the build of an occupant, the occupant is notified of that he/she is in an optimum adjustment position and thus seat position adjustment is facilitated.

### Solution to Problem

An implementation of the present invention is a vehicle seat including: a seat cushion forming the seating face portion of the seat; and a seat back provided on the back side of the seat cushion and forming the backrest portion of the seat. The vehicle seat is characterized in that there are provided: a seat position adjusting means for adjusting a position of each part of the seat; and an adjustment position displaying means that allows an adjustment position of each part of the seat to be visually confirmed.

Another implementation of the present invention is a vehicle seat including: a seat cushion forming the seating face portion of the seat; and a seat back provided on the back side of the seat cushion and forming the backrest portion of the seat. The vehicle seat further includes: an adjustment position selecting means for selecting an adjustment position of each part of the seat in accordance with the build of an occupant; a seat position adjusting means for the occupant to adjust a position of each part of the seat by manual operation; and a seat position detecting means for detecting a position of each part of the seat. The vehicle seat is characterized in that: build information selected by the adjustment position selecting means and positional information detected by the seat position detecting means are transmitted to an electronic control unit provided in a vehicle by wireless communication or wired communication; at the electronic control unit, proper positional information of each part of the seat estimated based on the build information is checked against the positional information; and when both pieces of information agree with each other, the occupant is notified of the agreement by a notifying means.

Another implementation of the present invention is a vehicle seat including: a seat cushion forming a seating face portion of the seat; and a seat back provided on the back side of the seat cushion and forming a backrest portion of the seat. The vehicle seat further includes: an adjustment position selecting means for selecting an adjustment position of each part of the seat in accordance with the build of an occupant; a seat position adjusting means for electrically adjusting a position of each part of the seat; and a seat position detecting means for detecting a position of each part of the seat. The vehicle seat is characterized in that: build information selected by the adjustment position selecting means and positional information detected by the seat position detecting means are transmitted to an electronic control unit provided in a vehicle by wireless communication or wired communication; at the electronic control unit, proper positional information of each part of the seat estimated based on the build information is checked against the positional information; and when both pieces of information agree with each other, the occupant is notified of the agreement by a notifying means.

Another implementation of the present invention is a vehicle seat including: a seat cushion forming a seating face portion of the seat; and a seat back provided on the back side of the seat cushion and forming a backrest portion of the seat. The vehicle seat further includes: a seat position adjusting means for electrically adjusting a position of each part of the seat; and a seat position detecting means for detecting a position of each part of the seat. The vehicle seat is characterized in that: build information of an occupant detected by a build detecting means mounted in a vehicle or a build detecting means carried by the occupant and positional information detected by the seat position detecting means are transmitted to an electronic control unit provided in the vehicle by wireless communication or wired communication; at the electronic control unit, proper positional information of each part of the seat estimated based on the build information is checked against the positional information; and when both pieces of information agree with each other, the occupant is notified of the agreement by a notifying means.

### Advantageous Effects of Invention

According to one aspect of the present invention, when a seat position is adjusted in accordance with the build of an occupant, the occupant is notified visually or by any other means of that he/she is in an optimum adjustment position and a vehicle seat in which seat position adjustment is facilitated and excellent fit feeling is obtained can be thereby implemented.

Other problems, configuration elements, and effects than described above will be apparent from the following description of embodiments.

### Brief Description of Drawings

FIG. 1A is a drawing illustrating a vehicle seat in one embodiment of the present invention.
FIG. 1B is a drawing illustrating a part of a vehicle seat in one embodiment of the present invention.
FIG. 2A is a drawing illustrating graduations for a vehicle seat in one embodiment of the present invention.
FIG. 2B is a drawing illustrating graduations for a vehicle seat in one embodiment of the present invention.
FIG. 3A is a drawing illustrating a positioning system of a vehicle seat in one embodiment of the present invention.
FIG. 3B is a drawing illustrating buttons of a vehicle seat in one embodiment of the present invention.
FIG. 4A is a drawing illustrating a switch of a vehicle seat in one embodiment of the present invention;
FIG. 4B is a drawing illustrating a switch of a vehicle seat in one embodiment of the present invention.
FIG. 4C is a drawing illustrating a switch of a vehicle seat in one embodiment of the present invention.
FIG. 5 is a drawing illustrating a positioning system of a vehicle seat in one embodiment of the present invention.
FIG. 6 is a drawing illustrating a positioning system of a vehicle seat in one embodiment of the present invention.
FIG. 7 is a drawing illustrating a build detection method in an embodiment of the present invention.
FIG. 8A is a drawing illustrating a build detection method for a vehicle seat in one embodiment of the present invention.
FIG. 8B is a drawing illustrating a build detection method for a vehicle seat in one embodiment of the present invention.
FIG. 8C is a drawing illustrating a build detection method for a vehicle seat in one embodiment of the present invention.
FIG. 9 is a drawing illustrating a build detection method for a vehicle seat in one embodiment of the present invention.
FIG. 10 is a drawing illustrating a build detection method for a vehicle seat in one embodiment of the present invention.
FIG. 11 is a drawing illustrating a build detection method for a vehicle seat in one embodiment of the present invention.
FIG. 12 is a drawing illustrating a build detection method for a vehicle seat in one embodiment of the present invention.
FIG. 13A is a drawing illustrating an operation flow of a vehicle seat in one embodiment of the present invention.
FIG. 13B is a drawing illustrating an operation flow of a vehicle seat in one embodiment of the present invention.
FIG. 13C is a drawing illustrating an operation flow of a vehicle seat in one embodiment of the present invention.
FIG. 13D is a drawing illustrating an operation flow of a vehicle seat in one embodiment of the present invention.
FIG. 13E is a drawing illustrating an operation flow of a vehicle seat in one embodiment of the present invention.
FIG. 14 is a drawing illustrating an overview of a typical vehicle seat.

### Description of Embodiments

Hereafter, a description will be given to embodiments of the present invention with reference to the drawings.

### First Embodiment

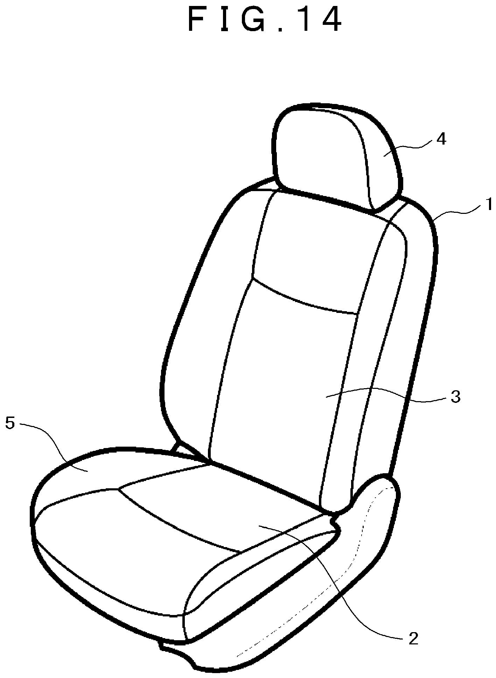

A description will be given to a configuration of a typical vehicle seat used in automobiles or the like with reference to FIG. 14. As illustrated in FIG. 14, the vehicle seat 1 includes as main parts thereof: a seat cushion 2 forming a seating face portion of the seat; a seat back 3 provided on the back side of the seat cushion 2 and forming a backrest portion of the seat; and a headrest 4 for protecting the head and neck of an occupant, provided at the top of the seat back 3. The seat cushion 2 is provided on both sides thereof with a side support 5 functioning as a support for a side portion of the seating face portion.

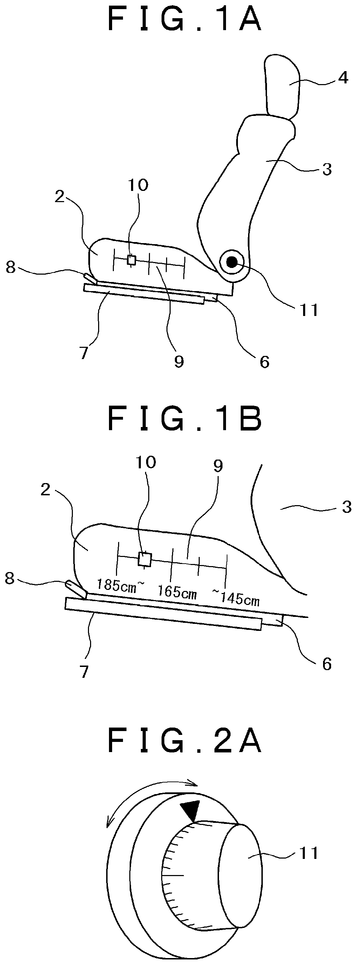

A description will be given to a configuration and a working-effect of a vehicle seat in an embodiment of the present invention with reference to FIG. 1A to FIG. 2B.

FIG. 1A is a side view of a vehicle seat in this embodiment. FIG. 1B is an enlarged view of a side of the seat cushion 2 in FIG. 1A.

As illustrated in FIG. 1A, the vehicle seat in this embodiment includes a seat cushion 2, a seat back 3, and a headrest 4 as main components thereof.

The seat cushion 2 is provided on the underside thereof, that is, on the surface on the opposite side to the seating face side of the seat cushion 2 with a seat slide (slide rails). The seat slide is for adjusting the fore-and-aft position of the seat cushion 2 relative to the vehicle body. The seat slide (slide rails) is made up of upper rails 6 fixed on the underside of the seat cushion 2 and lower rails 7 fixed on the floor of the vehicle body. The upper rails 6 and the lower rails 7 are engaged with each other and the upper rails 6 are slid on the lower rails 7. This enables adjustment of the fore-and-aft position of the seat cushion 2 relative to the vehicle, that is, the fore-and-aft position of the vehicle seat relative to the vehicle.

The seat slide (slide rails) is provided with a slide rail unlock lever 8. The slide rail unlock lever 8 can be used to lock (arrest) forward and backward slide (forward and backward movement) of the upper rails 6 on the lower rails 7. Forward and backward slide (forward and backward movement) of the upper rails 6 on the lower rails 7 is enabled by using the slide rail unlock lever 8 to unlock the slide rails.

That is, the seat slide (slide rails) made up of the upper rails 6 and the lower rails 7 functions as a fore-and-aft position adjusting means for the seat.

The seat cushion 2 is provided on a side thereof with sliding graduations 9. In this example described in connection to this embodiment, as illustrated in FIG. 1B, graduations corresponding to the stature of an occupant are provided. However, graduations corresponding to the build, for example, weight or sitting height, of an occupant may be provided instead of those corresponding to stature.

The seat back 3 is also provided on a side thereof with rotary graduations 11 in proximity to a joint with the seat cushion 2. Though not shown herein, the rotary graduations 11 also correspond to the build, such as stature or weight, of an occupant like the sliding graduations 9.

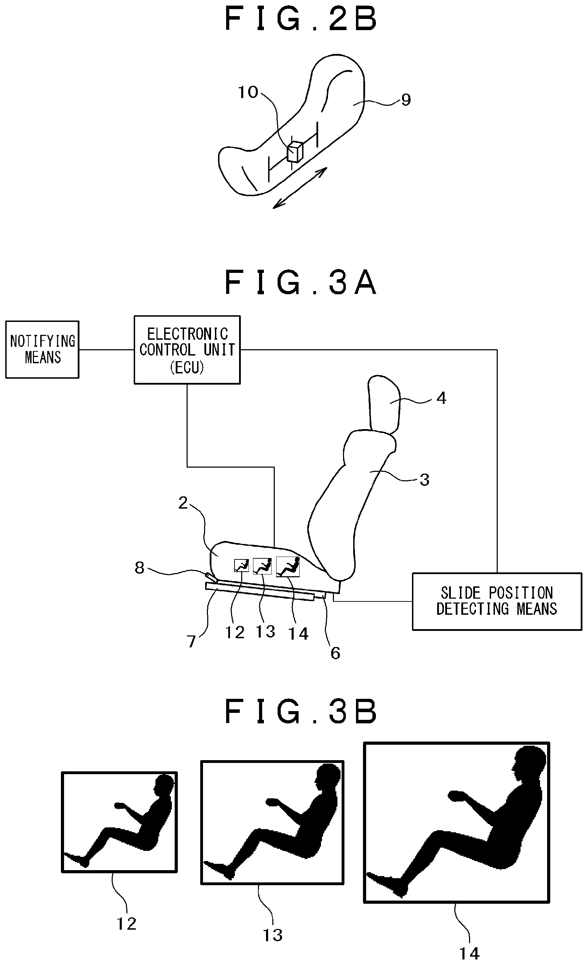

FIG. 2A is a conceptual rendering of the rotary graduations 11 and FIG. 2B is a conceptual rendering of the sliding graduations 9.

A description will be given to the operation of the sliding graduations 9 and the rotary graduations 11.

After an occupant is seated on the vehicle seat, he/she operates the slide rail unlock lever 8 to unlock the slide rails. The occupant thereafter moves the upper rails 6 and the seat cushion 2 on the lower rails 7 and adjusts a slide position (fore-and-aft position) of the seat cushion 2.

Though not shown herein, the lower rails 7 are coupled with a marking 10 provided on the sliding graduations 9. When an occupant slides the seat cushion 2 and the upper rails 6 forward or backward, the marking 10 is moved on the sliding graduations 9 in conjunction with this operation.

The occupant can visually check a position of the marking 10 on the sliding graduations 9 and thus easily confirm whether or not the fore-and-aft position of the seat slide is an adjustment position exactly suited to his/her own stature.

When the position is an adjustment position exactly suited to his/her own stature, the occupant uses the slide rail unlock lever 8 to lock the slide rails and terminates the slide position adjustment.

The rotary graduations 11 provided on the side face of the seat back 3 in proximity to joint with the seat cushion 2 is similarly rotated in conjunction with angular adjustment of the seat back 3 relative to the seat cushion 2. An occupant can thereby visually check an adjustment position.

Therefore, the occupant can easily confirm whether or not an angle of the seat back 3, that is, a reclining angle is equivalent to an adjustment position exactly suited to his/her own stature by visually checking a position on the rotary graduations 11.

As described up to this point, according to a vehicle seat in this embodiment, an advantage is brought about when an occupant manually performs positioning of each part of the seat. He/she can easily confirm that an adjustment position is exactly suited to his/her build by visually checking graduations or a marking liked with a positioning means for each part of the seat after adjustment or while performing adjustment.

In the example of this embodiment described above, an occupant performs positioning of each part of the seat. The sliding graduations 9, marking 10, and rotary graduations 11 are operated in conjunction with this positioning operation and carry out an adjustment position indicating function. Also in a vehicle seat so configured that positioning of each part of the seat is performed by a power mechanism such as a motor, that is, electrically, the same effect can be obtained. This is done by providing graduations or a marking operated in conjunction with positioning of each part of the seat.

In the example of this embodiment described above, the seat adjustment items include fore-and-aft position adjustment of the seat slide and angular adjustment of the seat back. This embodiment may be used for positioning of any other part of the seat, for example, height adjustment of the seat cushion, angular adjustment of the seat cushion, height adjustment of the seat back, height adjustment of the headrest, and the like. Also in these cases, the same effect can be obtained.

### Second Embodiment

A description will be given to a vehicle seat in another embodiment of the present invention with reference to FIG. 3A to FIG. 4C.

FIG. 3A illustrates a side view of a vehicle seat in this embodiment and a configuration of a system linked therewith. FIG. 3B is enlarged views of the buttons 12, 13, and 14 in FIG. 3A.

As illustrated in FIG. 3A, the vehicle seat in this embodiment includes a seat cushion 2, a seat back 3, and a headrest 4 as main components thereof.

This embodiment is identical with the first embodiment in that: upper rails 6 and lower rails 7 are engaged with each other and the upper rails 6 are slid on the lower rails 7, the fore-and-aft position of the seat cushion 2 relative to the vehicle, that is, the fore-and-aft position of the vehicle seat relative to the vehicle being thereby adjusted; and a seat slide (slide rails) is provided with a slide rail unlock lever 8. Therefore, a detailed description of these configuration elements will be omitted.

The seat cushion 2 is provided on a side face thereof with the buttons 12, 13, and 14 for selecting the build of an occupant. These buttons function as an adjustment position selecting means for each part of the seat. An occupant can select an adjustment position of the seat suited to his/her build by pressing a button corresponding to his/her build.

An adjustment position of the seat, that is, build information of the occupant selected by pressing any of the buttons 12, 13, and 14 is transmitted to an electronic control unit (ECU) provided in the vehicle by wireless communication or wired communication.

As can be seen from FIG. 3B, a small, medium, or large build of an occupant can be selected through the buttons 12, 13, and 14 shown in FIG. 3A.

Subsequently, the occupant uses the slide rail unlock lever 8 to unlock the seat slide (slide rails) and manually slides the seat cushion 2 and the upper rails 6 relative to the lower rails 7 to adjust a fore-and-aft position of the seat.

In adjustment positions of each part of the seat, an adjustment position detecting means is provided for continuously detecting adjustment positions. FIG. 3A illustrates an example of a slide position detecting means for detecting a fore-and-aft position of the seat slide.

Slide positional information detected by the slide position detecting means is transmitted to an electronic control unit (ECU) provided in the vehicle by wireless communication or wired communication.

At the electronic control unit (ECU), the following pieces of information are checked against each other: proper positional information of each part of the seat estimated based on the build information of the occupant inputted through the adjustment position selecting means, that is, any of the buttons 12, 13, and 14; and the slide positional information detected by the slide position detecting means.

The proper positional information of each part of the seat estimated based on the build information inputted through the adjustment position selecting means and the slide positional information detected by the slide position detecting means may agree with each other. In this case, the occupant is notified through a notifying means of that: an adjustment position has exactly agreed with the adjustment position corresponding to the build information inputted through the adjustment position selecting means, that is, a desired adjustment position.

For this notifying means, notification by sound through a speaker provided in the vehicle, notification by light from a light source provided in the vehicle, notification by vibration of a vibrator provided in the vehicle, or the like can be used.

When the occupant confirms through sound, light, or vibration that an adjustment position is exactly suited to his/her own build, he/she uses the slide rail unlock lever 8 to lock the slide rails and terminates the slide position adjustment.

As described up to this point, according to a vehicle seat in this embodiment, an advantage is brought about when an occupant manually performs positioning of each part of the seat. First, he/she inputs his/her own build information to the electronic control unit (ECU) through the adjustment position selecting means. Positional information continuously detected by the adjustment position detecting means provided in adjustment positions of each part of the seat is inputted to the electronic control unit (ECU) after adjustment or during adjustment. Proper positional information of each part of the seat estimated based on the build information and the positional information are checked against each other. When adjustment positions contained in these pieces of information exactly agree with each other, the occupant can confirm the agreement through the notifying means. Therefore, the occupant can easily confirm that that adjustment position is exactly suited to his/her build.

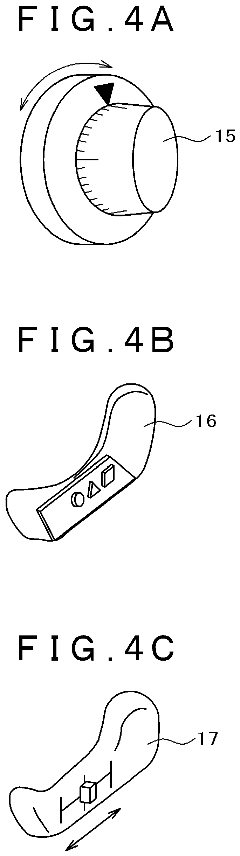

In the example illustrated in FIG. 3A and FIG. 3B, the buttons 12, 13, and 14 are used as the adjustment position selecting means. The dial-type switch 15 shown in FIG. 4A, the button-type switch 16 shown in FIG. 4B, the slide-type switch 17 shown in FIG. 4C, or the like may also be used instead.

In the example of this embodiment described above, the seat adjustment items include fore-and-aft position adjustment of the seat slide. This embodiment may be used for positioning of any other part of the seat, for example, height adjustment of the seat cushion, angular adjustment of the seat cushion, height adjustment of the seat back, angular adjustment of the seat back, height adjustment of the headrest, and the like. Also in these cases, the same effect can be obtained.

### Third Embodiment

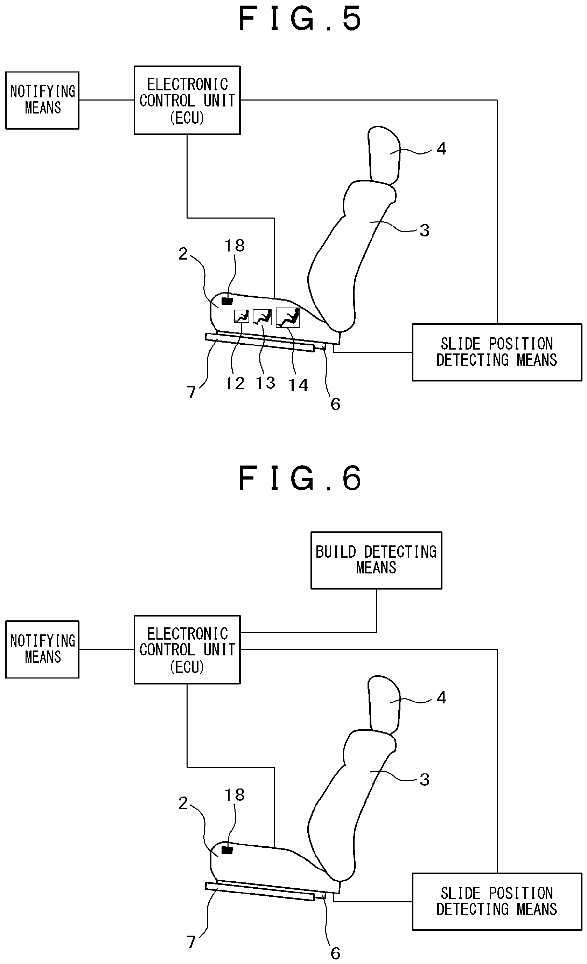

A description will be given to a vehicle seat in another embodiment of the present invention with reference to FIG. 5.

FIG. 5 illustrates a side view of a vehicle seat in this embodiment and a configuration of a system linked therewith.

This embodiment is identical with the second embodiment in that: the vehicle seat includes a seat cushion 2, a seat back 3, and a headrest 4 as main components thereof; and upper rails 6 and lower rails 7 are engaged with each other and the upper rails 6 are slid on the lower rails 7, a fore-and-aft position of the seat cushion 2 relative to the vehicle, that is, the fore-and-aft position of the vehicle seat relative to the vehicle being thereby adjusted. Therefore, a detailed description of these configuration elements will be omitted.

In a vehicle seat in the second embodiment, positioning of each part of the seat is manually performed by an occupant him/herself. In a vehicle seat in this embodiment, positioning of each part of the seat is electrically performed by a power mechanism, such as a motor, built in the seat. The vehicle seat in this embodiment is different from the vehicle seat in the second embodiment in this regard.

As illustrated in FIG. 5, the vehicle seat in this embodiment is provided on a side face of the seat cushion 2 with a slide position adjustment switch 18. An occupant can press this slide position adjustment switch 18 to electrically adjust a fore-and-aft position of the seat slide.

In the vehicle seat in this embodiment, similarly to that in the second embodiment, first, an occupant presses any of the buttons 12, 13, and 14 provided on a side face of the seat cushion 2 for selecting an occupant's build and thereby selects an adjustment position of the seat suited to the build of the occupant.

An adjustment position of the seat, that is, build information of the occupant selected by pressing any of the buttons 12, 13, and 14 is transmitted to an electronic control unit (ECU) provided in the vehicle by wireless communication or wired communication.

Subsequently, the occupant presses the slide position adjustment switch 18 to electrically slide the seat cushion 2 and the upper rails 6 on the lower rails 7 and thereby adjust a fore-and-aft position.

In adjustment positions of each part of the seat, an adjustment position detecting means is provided for continuously detecting adjustment positions. FIG. 5 illustrates an example of a slide position detecting means for detecting a fore-and-aft position of the seat slide.

Slide positional information detected by the slide position detecting means is transmitted to an electronic control unit (ECU) provided in the vehicle by wireless communication or wired communication.

At the electronic control unit (ECU), the following pieces of information are checked against each other: proper positional information of each part of the seat estimated based on build information of the occupant inputted through the adjustment position selecting means, that is, any of the buttons 12, 13, and 14; and the slide positional information detected by the slide position detecting means.

The proper positional information of each part of the seat estimated based on the build information inputted through the adjustment position selecting means and the slide positional information detected by the slide position detecting means may agree with each other. In this case, the occupant is notified through a notifying means of that: an adjustment position has exactly agreed with the adjustment position corresponding to the build information inputted through the adjustment position selecting means, that is, a desired adjustment position.

For this notifying means, as in the second embodiment, notification by sound through a speaker provided in the vehicle, notification by light from a light source provided in the vehicle, notification by vibration of a vibrator provided in the vehicle, or the like can be used.

When the occupant confirms through sound, light, or vibration that an adjustment position is exactly suited to his/her own build, he/she terminates the electrical slide position adjustment.

As described up to this point, according to a vehicle seat in this embodiment, an advantage is brought about when an occupant electrically performs positioning of each part of the seat. First, he/she inputs his/her own build information to the electronic control unit (ECU) through the adjustment position selecting means. Positional information continuously detected by the adjustment position detecting means provided in adjustment positions of each part of the seat is inputted to the electronic control unit (ECU) after adjustment or during adjustment. Proper positional information of each part of the seat estimated based on the build information and the positional information are checked against each other. When adjustment positions contained in these pieces of information exactly agree with each other, the occupant can confirm the agreement through the notifying means. Therefore, the occupant can easily confirm that that adjustment position is exactly suited to his/her build.

Also in this embodiment, as in the second embodiment, the seat adjustment items include fore-and-aft position adjustment of the seat slide. This embodiment may be used for positioning of any other part of the seat, for example, height adjustment of the seat cushion, angular adjustment of the seat cushion, height adjustment of the seat back, angular adjustment of the seat back, height adjustment of the headrest, or the like. Also in these cases, the same effect can be obtained.

### Fourth Embodiment

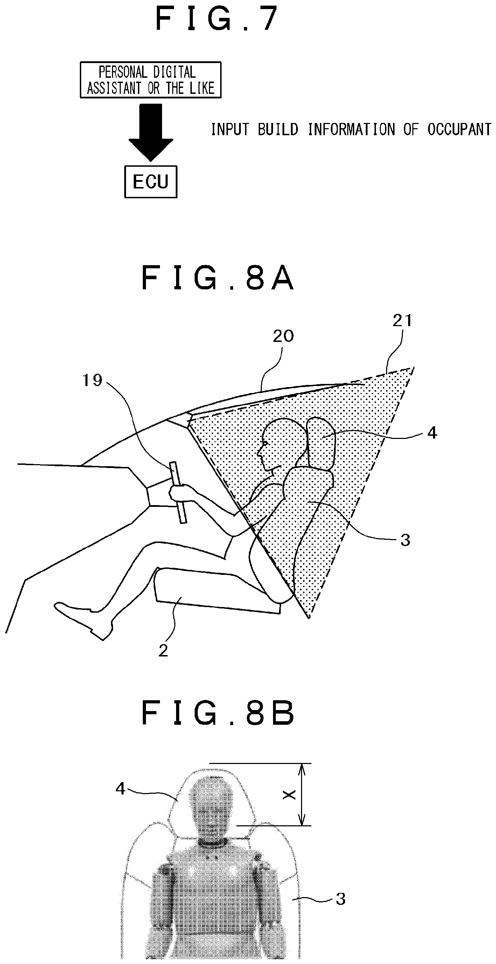

A description will be given to a vehicle seat in another embodiment of the present invention with reference to FIG. 6 and FIG. 7.

FIG. 6 illustrates a side view of a vehicle seat in this embodiment and a configuration of a system linked therewith.

This embodiment is identical with the third embodiment in that: the vehicle seat includes a seat cushion 2, a seat back 3, and a headrest 4 as main components thereof; upper rails 6 and lower rails 7 are engaged with each other and the upper rails 6 are slid on the lower rails 7, a fore-and-aft position of the seat cushion 2 relative to the vehicle, that is, a fore-and-aft position of the vehicle seat relative to the vehicle being thereby adjusted; and the seat cushion 2 is provided on a side face thereof with a slide position adjustment switch 18. Therefore, a detailed description of these configuration elements will be omitted.

In a vehicle seat in the third embodiment, the seat cushion 2 is provided on a side face thereof with an adjustment position selecting means, that is, the buttons 12, 13, and 14 as a build information inputting means. The vehicle seat in this embodiment is different from the vehicle seat in the third embodiment in that a build detecting means is provided instead of the buttons 12, 13, and 14 as illustrated in FIG. 6.

In the example of the vehicle seat in the third embodiment described above, the buttons 12, 13, and 14 provided on a side face of the seat cushion 2 are used as a means for selecting an adjustment position of the seat according to the build of an occupant. In this embodiment, as shown in FIG. 7, a personal digital assistant, such as a smartphone, is used as an inputting means for build information of an occupant of the seat.

As shown in FIG. 7, physical features, such as stature, sitting height, and weight, that is, build information of an occupant is stored in a personal digital assistant, such as a smartphone, in advance. When the occupant gets in the vehicle or after the occupant seats him/herself on the seat, the stored build information is transmitted from the personal digital assistant to an electronic control unit (ECU) provided in the vehicle by wireless communication or wired communication.

Any type of a personal digital assistant may be used as long as it allows build information of an occupant to be stored and has a function of transmitting the build information to the ECU by wireless communication or wired communication. Aside from a smartphone, for example, a traditional Japanese-style cell phone, a portable game machine, a remote controller, a portable car navigation system, a mobile notebook computer, a music player, a camera, a video camera, an electronic personal organizer, or the like can also be used.

Subsequently, the occupant presses the slide position adjustment switch 18 to electrically slide the seat cushion 2 and the upper rails 6 on the lower rails 7 and adjust a fore-and-aft position.

Slide positional information detected by the slide position detecting means is transmitted to an electronic control unit (ECU) provided in the vehicle by wireless communication or wired communication.

At the electronic control unit (ECU), the following pieces of information are checked against each other: proper positional information of each part of the seat estimated based on build information of the occupant inputted through the build detecting means, such as a personal digital assistant; and the slide positional information detected by the slide position detecting means.

The proper positional information of each part of the seat estimated based on the build information inputted through the build detecting means and the slide positional information detected by the slide position detecting means may agree with each other. In this case, the occupant is notified through a notifying means of that: an adjustment position has exactly agreed with the adjustment position corresponding to the build information inputted through the build detecting means, that is, a desired adjustment position.

For this notifying means, as in the second embodiment or the third embodiment, notification by sound through a speaker provided in the vehicle, notification by light from a light source provided in the vehicle, notification by vibration of a vibrator provided in the vehicle, or the like can be used.

When the occupant confirms through sound, light, or vibration that an adjustment position is exactly suited to his/her own build, he/she terminates the electrical slide position adjustment.

As described up to this point, according to a vehicle seat in this embodiment, an advantage is brought about when an occupant electrically performs positioning of each part of the seat. First, he/she inputs his/her own build information to the electronic control unit (ECU) through the build detecting means such as a personal digital assistant. Positional information continuously detected by the adjustment position detecting means provided in adjustment positions of each part of the seat is inputted to the electronic control unit (ECU) after adjustment or during adjustment. Proper positional information of each part of the seat estimated based on the build information and the positional information are checked against each other. When adjustment positions contained in these pieces of information exactly agree with each other, the occupant can confirm the agreement through the notifying means. Therefore, the occupant can easily confirm that that adjustment position is exactly suited to his/her build.

Also in this embodiment, as in the second embodiment or the third embodiment, the seat adjustment items include fore-and-aft position adjustment of each part of the seat slide. This embodiment may be used for positioning of any other part of the seat, for example, height adjustment of the seat cushion, angular adjustment of the seat cushion, height adjustment of the seat back, angular adjustment of the seat back, height adjustment of the headrest, or the like. Also in these cases, the same effect can be obtained.

### Fifth Embodiment

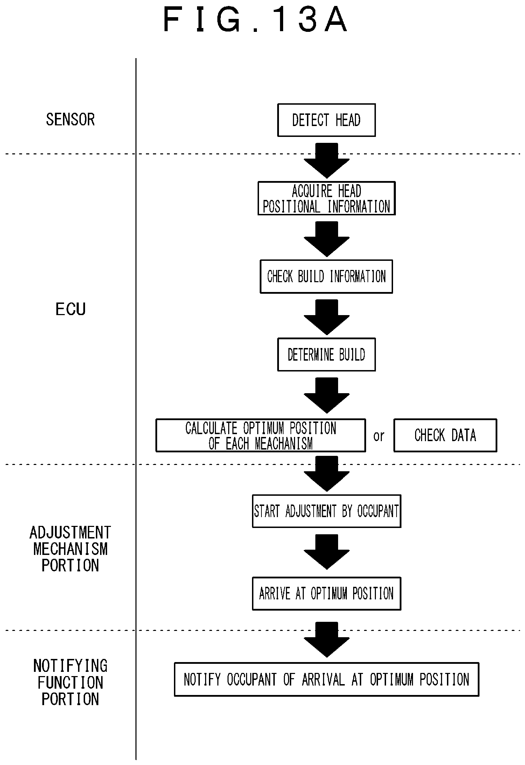

A description will be given to a modification to the build detecting means in the fourth embodiment with reference to FIG. 8A to FIG. 8C and FIG. 13A. FIG. 8A illustrates a build detection method based on an analysis on an image or a moving image. An image of an occupant seated on the seat is picked up with an image pickup means, such as a video camera, a digital camera, or a photodetector, equipped in the vehicle and the position of the head of the occupant, the position of contact between the occupant's scapulae and the seat back 3, or the like is detected. For this image pickup means such as a video camera, for example, a video camera equipped with a solid-state image sensing device, such as a CCD image sensor or the like is used.

Aside from detection of a head position or a scapula position, the build or a seating position of an occupant can also be recognized as long as it is located within an image pickup area 21. Other examples of items to be recognized include: the height of a line of sight of the occupant, the distance from the vertex of the occupant to the roof (ceiling) of the vehicle body, the distance from the vertex of the occupant to the top of the seat, the distance from the vertex to the shoulders of the occupant and the like.

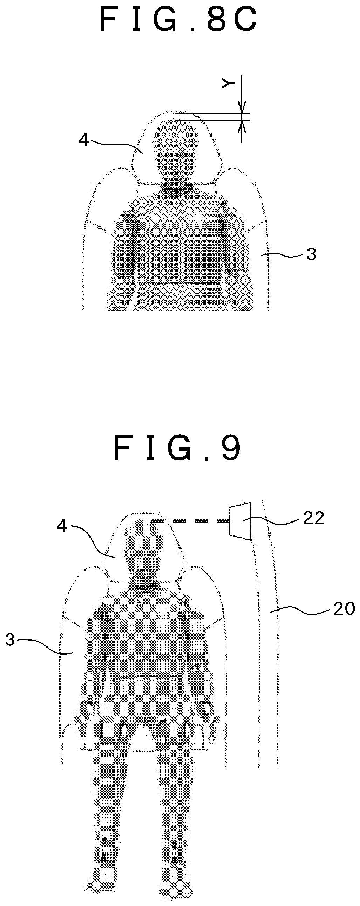

FIG. 8B illustrates an example in which the distance X from the vertex to the cervix (neck) of a sitting occupant is recognized; and FIG. 8C illustrates an example in which the distance Y from the vertex of an occupant to the top of the seat, that is, the top of the headrest is image-recognized.

A description will be given to an operation flow for performing positioning of each part of the seat based on image or moving image information with reference to FIG. 13A. This information is acquired through image pickup operation performed with an image pickup means such as a video camera equipped in the vehicle. The flowchart in FIG. 13A illustrates an example in which detection of the head of an occupant based on an image analysis is used.

As shown in FIG. 13A, the head of the occupant is detected from an image or a moving image picked up with the image pickup means equipped in the vehicle. The resulting head detection information is transmitted to such an electronic control unit (ECU) provided in the vehicle as described in relation to the fourth embodiment. In the ECU, positional information of the head is acquired through image processing. Multiple pieces of build information stored in the ECU beforehand and the positional information of the head obtained from the image acquired with the image pickup means are checked against each other. The build of the occupant is thereby determined (estimated).

The occupant starts positioning using an adjustment mechanism portion of each part of the seat by manual operation, electrical driving means, or the like.

Thereafter, an adjustment position is detected with an adjustment position detecting means provided in each mechanical portion of the seat and the detected adjustment positions are transmitted to the ECU. When it is determined in the ECU that a seat position has arrived at an optimum position, the occupant is notified through a notifying means of that the seat position has been just suitably adjusted.

As this notifying means cited herein, sound through a speaker provided in the vehicle, light from a light source provided in the vehicle, vibration of a vibrator provided in the vehicle, or the like is used.

The adjustment position detecting means is an adjustment position detecting means provided in adjustment positions of each part of the seat. Concrete examples of these detecting means include: a seat slide position detecting means, such as a potentiometer, provided in a seat slide position adjustment mechanism; a seat vertical position detecting means provided in a seat vertical position adjustment mechanism; a seat cushion angle detecting means provided in a seat cushion angle adjustment mechanism; a reclining position detecting means provided in a reclining position adjustment mechanism; and a headrest vertical position detecting means provided in a headrest vertical position adjustment mechanism.

As described up to this point, according to a vehicle seat in this embodiment, the build or a seating position of an occupant is shot with an image pickup means provided in the vehicle as the occupant is seated on the seat. The resulting image or moving image is analyzed to acquire build information or seating positional information. Based on these pieces of information, an optimum seat position corresponding to the build of the occupant can be easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

### Sixth Embodiment

A description will be given to a modification to the build detecting means in the fourth embodiment with reference to FIG. 9 and FIG. 13A. FIG. 9 illustrates an occupant detection method using a noncontact-type sensor, such as an infrared sensor. A position of the vertex of an occupant is detected with a noncontact-type human sensor 22, such as an infrared sensor, mounted in a vehicle body 20. Aside from an infrared sensor, for example, a wave sensor, such as a sonic sensor, an ultrasonic sensor, or an optical sensor, may be used as the noncontact-type sensor.

Build information and seating positional information of the occupant acquired with the noncontact-type sensor mounted in the vehicle, as mentioned above are transmitted to an electronic control unit (ECU) provided in the vehicle as described in relation to the fourth embodiment.

The occupant starts positioning of each part of the seat by manual operation, electrical driving means, or the like.

Thereafter, an adjustment position is detected with an adjustment position detecting means provided in each mechanical portion of the seat and the detected adjustment positions are transmitted to the ECU. When it is determined in the ECU that a seat position has arrived at an optimum position, the occupant is notified through a notifying means that the seat position has been just suitably adjusted.

As this notifying means cited herein, sound through a speaker provided in the vehicle, light from a light source provided in the vehicle, vibration of a vibrator provided in the vehicle, or the like is used as in the fourth embodiment.

As described up to this point, according to a vehicle seat in this embodiment, the build or a seating position of an occupant is detected with a noncontact-type sensor provided in the vehicle as the occupant is seated on the seat. Based on these pieces of detection information, build information and seating positional information are acquired. Based on these pieces of information, an optimum seat position corresponding to the build of the occupant can be more easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

### Seventh Embodiment

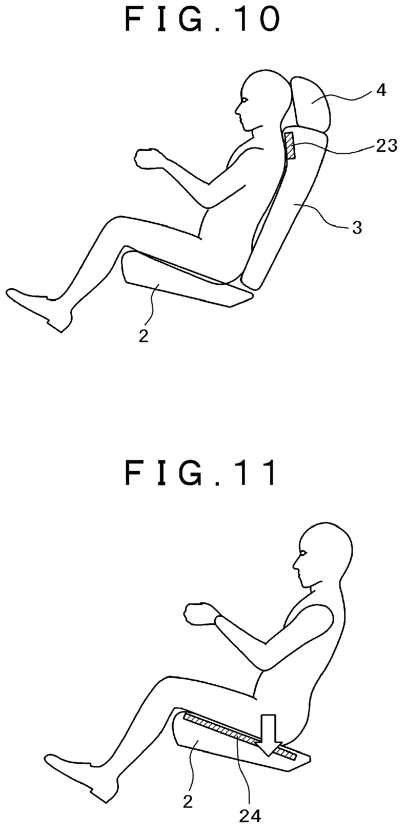

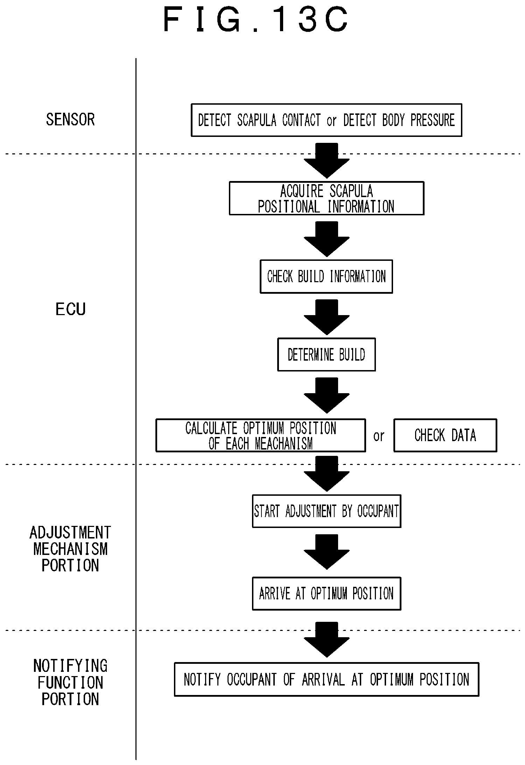

A description will be given to a modification to the build detecting means in the fourth embodiment with reference to FIG. 10 and FIG. 13C. FIG. 10 illustrates a build detection method using a contact-type sensor, such as a capacitive sensor. In a vehicle seat in this embodiment, positions of the scapulae of an occupant are detected with a contact-type human sensor 23, such as a capacitive sensor, mounted in the seat back 3.

The seat back 3 is so shaped that the shape of a part above a part in contact with the scapulae of an occupant is bent forwarder than the shape of a part below the part in contact with the scapulae of the occupant. Thus, the shape of a surface with which the back of the occupant is brought into contact when the occupant seats him/herself on the seat is in harmony with the convex shape of the scapulae of the occupant.

Aside from a capacitive sensor, for example, an electrode, a body pressure sensor, a temperature sensor, a mechanical switch whose setting is changed in response to contact with an occupant, or the like may be used as the contact-type sensor. A combination of a plurality of these sensors may also be installed. Installing multiple different types of sensors enables the build or a seating position of an occupant to be more accurately detected.

A description will be given to an operation flow for performing positioning of each part of the seat based on a detected scapula contact or body pressure of an occupant with reference to FIG. 13C. These pieces of information are acquired with a contact-type sensor provided in the seat back 3 as mentioned above.

As shown in FIG. 13C, scapula contact detection information or body pressure detection information of an occupant acquired with a contact-type sensor provided in the seat back is transmitted to an electronic control unit (ECU) provided in the vehicle described in relation to the fourth embodiment. Scapula positional information is thereby acquired. Multiple pieces of build information stored in the ECU beforehand and the scapula positional information acquired with the contact-type sensor are checked against each other. The build of the occupant is thereby determined (estimated).

The occupant starts positioning using an adjustment mechanism portion of each part of the seat by manual operation, electrical driving means, or the like.

Thereafter, an adjustment position is detected with an adjustment position detecting means provided in each mechanical portion of the seat and the detected adjustment positions are transmitted to the ECU. When it is determined in the ECU that a seat position has arrived at an optimum position, the occupant is notified through a notifying means provided in the vehicle of that the seat position has been just exactly adjusted.

As this notifying means cited herein, sound through a speaker provided in the vehicle, light from a light source provided in the vehicle, vibration of a vibrator provided in the vehicle, or the like is used as in the fourth embodiment.

As described up to this point, according to a vehicle seat in this embodiment, the build or a seating position of an occupant is detected with a contact-type sensor or a body pressure sensor provided in the seat back as the occupant is seated on the seat. Based on these pieces of detection information, build information or seating positional information is acquired. On the basis of these pieces of information, an optimum seat position corresponding to the build of the occupant can be more easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

### Eighth Embodiment

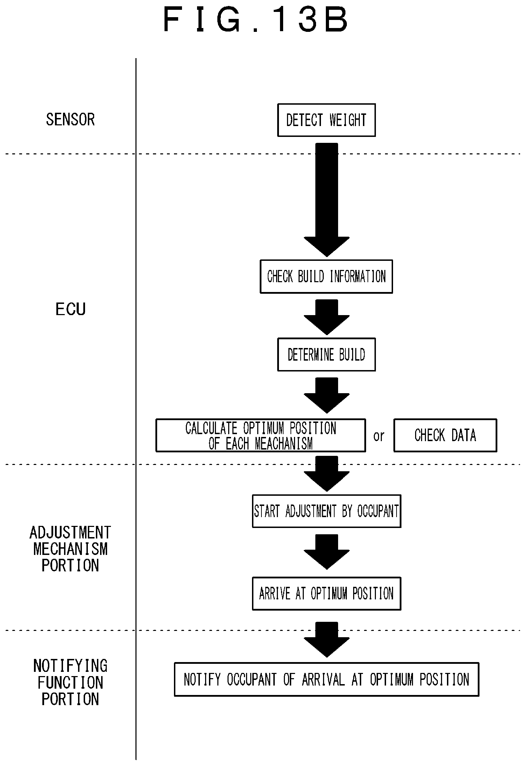

A description will be given to a modification to the build detecting means in the fourth embodiment with reference to FIG. 11 and FIG. 13B. FIG. 11 illustrates an occupant's weight detection method using a weight sensor. The weight of an occupant is detected with a weight sensor 24 built in the seat cushion 2.

As shown in FIG. 13B, the weight of the occupant is detected with the weight sensor 24 built in the seat cushion 2 and the acquired weight of the occupant is transmitted to an electronic control unit (ECU) provided in the vehicle described in relation to the fourth embodiment. In the ECU, the weight is checked against build information stored beforehand and the build of the occupant is thereby determined (estimated).

The occupant starts positioning using an adjustment mechanism portion of each part of the seat by manual operation, electrical driving means, or the like.

Thereafter, an adjustment position is detected with an adjustment position detecting means provided in each mechanical portion of the seat and the detected adjustment positions are transmitted to the ECU. When it is determined in the ECU that a seat position has arrived at an optimum position, the occupant is notified through a notifying means provided in the vehicle of that the seat position has been just exactly adjusted.

As this notifying means cited herein, sound through a speaker provided in the vehicle, light from a light source provided in the vehicle, vibration of a vibrator provided in the vehicle, or the like is used as in the fourth embodiment.

As described up to this point, according to a vehicle seat in this embodiment, the weight of an occupant is detected with a weight sensor built in the seat cushion as the occupant is seated on the seat. Based on the detected weight, build information or seating positional information is acquired and on the basis of these pieces of information, an optimum seat position corresponding to the build of the occupant can be more easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

### Ninth Embodiment

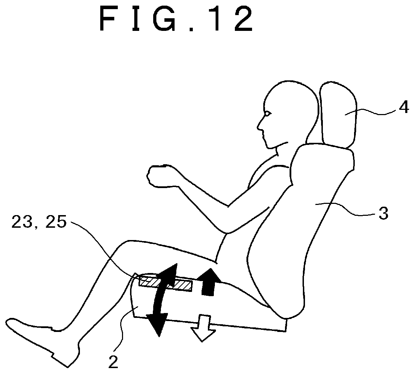

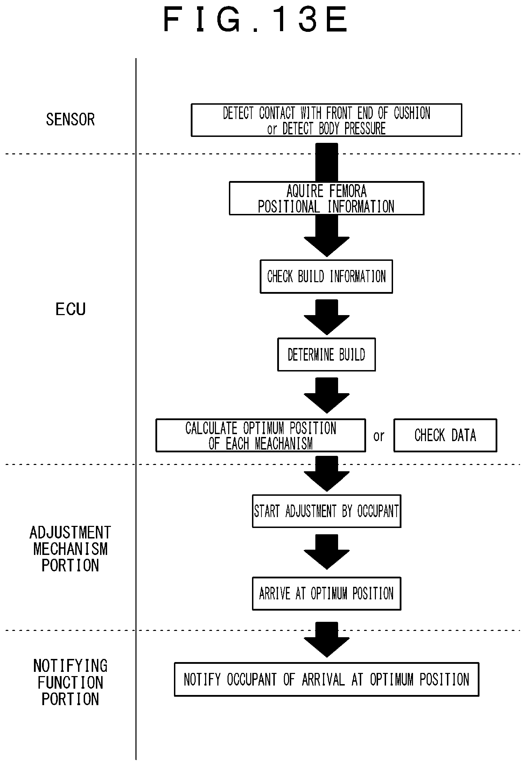

A description will be given to a modification to the build detecting means in the fourth embodiment with reference to FIG. 12 and FIG. 13E. FIG. 12 illustrates an occupant's femoral region contact detection and body pressure detection method using a contact-type sensor or a body pressure sensor. As an occupant is seated on the seat and puts his/her foot on a pedal of the vehicle, the occupant's femoral region contact or body pressure is detected. This detection is carried out with a contact-type human sensor 23 or a body pressure sensor 25 built in the front end (front face side) of the seat cushion 2.

A description will be given to an operation flow for performing positioning of each part of the seat with reference to FIG. 13E. This positioning is carried out based on the occupant's femoral region contact or body pressure detected with the contact-type human sensor 23 or body pressure sensor 25 built in the front end (front face side) of the seat cushion 2 as mentioned above.

The occupant's femoral region contact detection or the body pressure of the femoral region is acquired with the contact-type human sensor 23 or body pressure sensor 25 built in the front end (front face side) of the seat cushion 2. This information is transmitted to an electronic control unit (ECU) provided in the vehicle described in relation to the fourth embodiment. In the ECU, multiple pieces of build information stored beforehand and the acquired information of the occupant's femoral region contact detection or the body pressure of the femoral region are checked against each other. The build of the occupant is thereby determined (estimated).

The occupant starts positioning using an adjustment mechanism portion of each part of the seat by manual operation, electrical driving means, or the like.

Thereafter, an adjustment position is detected with an adjustment position detecting means provided in each mechanical portion of the seat and the detected adjustment positions are transmitted to the ECU. When it is determined in the ECU that a seat position has arrived at an optimum position, the occupant is notified through a notifying means provided in the vehicle of that the seat position has been just exactly adjusted.

As this notifying means cited herein, sound through a speaker provided in the vehicle, light from a light source provided in the vehicle, vibration of a vibrator provided in the vehicle, or the like is used as in the fourth embodiment.

As described up to this point, according to a vehicle seat in this embodiment, contact of the femoral region of or a body pressure of the femoral region of an occupant is detected as the occupant is seated on the seat and puts his/her foot on a pedal of the vehicle. This detection is carried out with a contact-type sensor or a body pressure sensor built in the front end (front face side) of the seat cushion. Based on these pieces of detection information, build information or seating positional information is acquired. On the basis of these pieces of information, an optimum seat position corresponding to the build of the occupant can be more easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

### 10th Embodiment

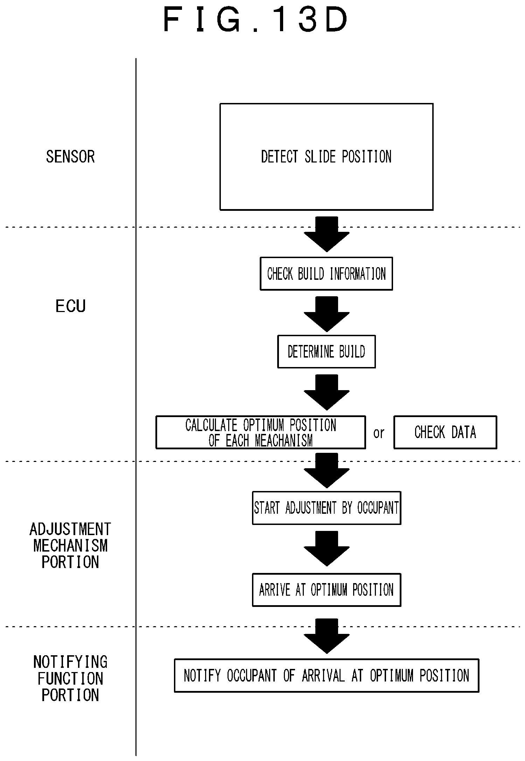

A description will be given to a modification to the build detecting means in the fourth embodiment with reference to FIG. 13D. FIG. 13D shows an operation flow for performing positioning of each part of the seat. This positioning is carried out based on detection data acquired by detecting a position of the seat slide, that is, a fore-and-aft position of the seat when an occupant is seated on the seat and puts his/her foot on a pedal of the vehicle.

As described in relation to the first embodiment, a mechanism for adjusting a fore-and-aft position of the seat, that is, seat rails (seat slide) are provided between the vehicle seat and the vehicle body. The seat is moved over the seat rails such that the fore-and-aft direction of the seat is adjusted. A position of the seat slide is detected with a contact-type sensor or a noncontact-type sensor and resulting positional information of the seat slide is transmitted to an electronic control unit (ECU) provided in the vehicle described in relation to the fourth embodiment. In the ECU, multiple pieces of build information stored beforehand and the seat slide positional information are checked against each other. The build of the occupant is thereby determined (estimated).

The occupant starts positioning using an adjustment mechanism portion of each part of the seat by manual operation, electrical driving means, or the like.

Thereafter, an adjustment position is detected with an adjustment position detecting means provided in each mechanical part of the seat and the detected adjustment positions are transmitted to the ECU. When it is determined in the ECU that a seat position has arrived at an optimum position, the occupant is notified through a notifying means provided in the vehicle of that the seat position has been just exactly adjusted.

As this notifying means cited herein, sound through a speaker provided in the vehicle, light from a light source provided in the vehicle, vibration of a vibrator provided in the vehicle, or the like is used as in the fourth embodiment.

As described up to this point, according to a vehicle seat in this embodiment, a position of the seat slide is detected when an occupant is seated on the seat and puts his/her foot on a pedal of the vehicle. Based on resulting detection information, build information or seating positional information is acquired and on the basis of these pieces of information, an optimum seat position corresponding to the build of the occupant can be more easily selected in a short time.

When an occupant adjusts a seat position according to the build of the occupant, the occupant is notified of that an optimum adjustment position has been just obtained. Thus, seat position adjustment is facilitated and an adjustment result excellent in fit feeling can be obtained.

The present invention is not limited to the above-mentioned embodiments and includes various modifications. The above embodiments have been described in detail for making the present invention easily understandable and need not include all the configuration elements described above. A part of the configuration elements of an embodiment may be replaced with a configuration element of another embodiment; and a configuration element of an embodiment may be added to the configuration elements of another embodiment. A different configuration element may be added to or replaced with a part of the configuration elements of each embodiment and a part of the configuration elements of each embodiment may be deleted.

### Reference Signs List

- 1: Vehicle seat,
- 2: Seat cushion,
- 3: Seat back,
- 4: Headrest,
- 5: Side support,
- 6: Upper rails,
- 7: Lower rails,
- 8: Slide rail unlock lever,
- 9: Sliding graduations,
- 10: Marking,
- 11: Rotary graduations,
- 12, 13, 14: Button,
- 15: Dial-type switch,
- 16: Button-type switch,
- 17: Slide-type switch,
- 18: Slide position adjustment switch,
- 19: Steering wheel,
- 20: Vehicle body,
- 21: Image pickup area,
- 22: Noncontact-type human sensor,
- 23: Contact-type human sensor,
- 24: Weight sensor,
- 25: Body pressure sensor.

## Claims

1. A vehicle seat including a seat cushion forming the seating face portion of the seat and a seat back provided on the back side of the seat cushion and forming the backrest portion of the seat, the vehicle seat comprising:
a seat position adjusting means for adjusting a position of each part of the seat; and
an adjustment position displaying means allowing an adjustment position of each part of the seat to be visually checked.

2. The vehicle seat according to Claim 1,
wherein a position of each part of the seat is adjusted by an occupant manually operating the seat position adjusting means and the occupant visually checks an adjustment position through the adjustment position displaying means.

3. The vehicle seat according to Claim 1,
wherein a position of each part of the seat is electrically adjusted by the seat position adjusting means and an occupant visually checks an adjustment position through the adjustment position displaying means.

4. The vehicle seat according to any one of Claims 1 to 3,
wherein the adjustment position displaying means is either sliding graduations or rotary graduations provided on the vehicle seat.

5. The vehicle seat according to any one of Claims 1 to 4,
wherein the adjustment position displaying means is provided in the vehicle seat so that at least one adjustment position of a fore-and-aft adjustment position of the seat slide, a height adjustment position of the seat cushion, an angular adjustment position of the seat cushion, a height adjustment position of the seat back, and an angular adjustment position of the seat back.

6. The vehicle seat according to Claim 5, further comprising:
a headrest for protecting the head and cervix of an occupant at the upper part of the seat back,
wherein the adjustment position displaying means is provided in the vehicle seat so that a height adjustment position of the headrest can be visually checked.

7. A vehicle seat including a seat cushion forming the seating face portion of the seat and a seat back provided on the back side of the seat cushion and forming the backrest portion of the seat, the vehicle seat comprising:
an adjustment position selecting means for selecting an adjustment position of each part of the seat corresponding to the build of an occupant;
a seat position adjusting means for the occupant to manually adjust a position of each part of the seat; and
a seat position detecting means for detecting a position of each part of the seat,
wherein build information selected through the adjustment position selecting means and positional information detected with the seat position detecting means are transmitted to an electronic control unit provided in a vehicle by wireless communication or wired communication,
wherein in the electronic control unit, proper positional information of each part of the seat estimated based on the build information and the positional information are checked against each other and when both pieces of information agree with each other, the occupant is notified of the agreement through a notifying means.

8. The vehicle seat according to Claim 7,
wherein the adjustment position selecting means is any of a dial-type switch, slide-type switch, and button-type switch provided on the vehicle seat.

9. The vehicle seat according to Claim 7 or 8,
wherein the seat position adjusting means is capable of adjusting at least one of a fore-and-aft position of the seat slide, a height position of the seat cushion, an angle of the seat cushion, a height position of the seat back, and an angle of the seat back, and
wherein the seat position detecting means detects a position of a part of the seat adjusted with the seat position adjusting means.

10. The vehicle seat according to Claim 9, further comprising:
a headrest for protecting the head and cervix of an occupant at the upper part of the seat back,
wherein the seat position adjusting means is capable of adjusting a height position of the headrest, and
wherein the seat position detecting means detects a height position of the headrest adjusted with the seat position adjusting means.

11. The vehicle seat according to any one of Claims 7 to 10,
wherein the notifying means is notification by sound through a speaker provided in the vehicle.

12. The vehicle seat according to any one of Claims 7 to 10,
wherein the notifying means is notification by light from a light source provided in the vehicle.

13. The vehicle seat according to any one of Claims 7 to 10,
wherein the notifying means is notification by vibration of a vibrator provided in the vehicle.

14. A vehicle seat including a seat cushion forming the seating face portion of the seat and a seat back provided on the back side of the seat cushion and forming the backrest portion of the seat, the vehicle seat comprising:
an adjustment position selecting means for selecting an adjustment position of each part of the seat corresponding to the build of an occupant;
a seat position adjusting means for electrically adjusting a position of each part of the seat; and
a seat position detecting means for detecting a position of each part of the seat,
wherein build information selected through the adjustment position selecting means and positional information detected with the seat position detecting means are transmitted to an electronic control unit provided in the vehicle by wireless communication or wired communication, and
wherein in the electronic control unit, proper positional information of each part of the seat estimated based on the build information and the positional information are checked against each other and when both pieces of information agree with each other, the occupant is notified of the agreement through a notifying means.

15. The vehicle seat according to Claim 14,
wherein the adjustment position selecting means is any of a dial-type switch, slide-type switch, and button-type switch provided on the vehicle seat.

16. The vehicle seat according to Claim 14 or 15,
wherein the seat position adjusting means is capable of adjusting at least one of a fore-and-aft position of the seat slide, a height position of the seat cushion, an angle of the seat cushion, a height position of the seat back, and an angle of the seat back, and
wherein the seat position detecting means detects a position of a part of the seat adjusted with the seat position adjusting means.

17. The vehicle seat according to Claim 16, further comprising:
a headrest for protecting the head and cervix of an occupant at the upper part of the seat back,
wherein the seat position adjusting means is capable of adjusting a height position of the headrest, and
wherein the seat position detecting means detects a height position of the headrest adjusted with the seat position adjusting means.

18. The vehicle seat according to any one of Claims 14 to 17,
wherein the notifying means is notification by sound through a speaker provided in the vehicle.

19. The vehicle seat according to any one of Claims 14 to 17,
wherein the notifying means is notification by light from a light source provided in the vehicle.

20. The vehicle seat according to any of Claims 14 to 17,
wherein the notifying means is notification by vibration of a vibrator provided in the vehicle.

21. A vehicle seat including a seat cushion forming the seating face portion of the seat and a seat back provided on the back side of the seat cushion and forming the backrest portion of the seat, the vehicle seat comprising:
a seat position adjusting means for electrically adjusting a position of each part of the seat; and
a seat position detecting means for detecting a position of each part of the seat,
wherein build information of an occupant detected with a build detecting means mounted in the vehicle or a build detecting means carried by the occupant and positional information detected with the seat position detecting means are transmitted to an electronic control unit provided in the vehicle by wireless communication or wired communication, and
wherein in the electronic control unit, proper positional information of each part of the seat estimated based on the build information and the positional information are checked against each other and when both pieces of information agree with each other, the occupant is notified of the agreement through a notifying means.

22. The vehicle seat according to Claim 21,
wherein the build detecting means detects at least one piece of build information of a position of the head of an occupant, the weight of the occupant, contact of the femoral region of the occupant, a body pressure of the femoral region of the occupant, contact of the back of the occupant, a body pressure of the back of the occupant, a fore-and-aft position of the seat slide, and build information stored beforehand in a personal digital assistant carried by the occupant and transmits the build information to the electronic control unit.

23. The vehicle seat according to Claim 21 or 22,
wherein the seat position adjusting means is capable of adjusting at least one of a fore-and-aft position of the seat slide, a height position of the seat cushion, an angle of the seat cushion, a height position of the seat back, and an angle of the seat back, and
wherein the seat position detecting means detects a position of a part of the seat adjusted with the seat position adjusting means.

24. The vehicle seat according to Claim 23, further comprising:
a headrest for protecting the head and cervix of an occupant at the upper part of the seat back,
wherein the seat position adjusting means is capable of adjusting a height position of the headrest, and
wherein the seat position detecting means detects a height position of the headrest adjusted with the seat position adjusting means.

25. The vehicle seat according to any one of Claims 21 to 24,
wherein the notifying means is notification by sound through a speaker provided in the vehicle.

26. The vehicle seat according to any one of Claims 21 to 24,
wherein the notifying means is notification by light from a light source provided in the vehicle.

27. The vehicle seat according to any one of Claims 21 to 24,
wherein the notifying means is notification by vibration of a vibrator provided in the vehicle.
